Europäisches Patentamt

European Patent Office

Office européen des brevets

(19)

(11) Veröffentlichungsnummer: **0 197 239**
**B1**

(12) **EUROPÄISCHE PATENTSCHRIFT**

(45) Veröffentlichungstag der Patentschrift: **23.05.90**

(51) Int. Cl.⁵: **B 62 D 35/00**

(21) Anmeldenummer: **86100334.1**

(22) Anmeldetag: **13.01.86**

(54) **Luftleitvorrichtung am Heck eines Fahrzeuges.**

(30) Priorität: **30.03.85 DE 3511809**

(43) Veröffentlichungstag der Anmeldung:
**15.10.86 Patentblatt 86/42**

(45) Bekanntmachung des Hinweises auf die
Patenterteilung:
**23.05.90 Patentblatt 90/21**

(84) Benannte Vertragsstaaten:
**DE FR GB IT**

(56) Entgegenhaltungen:
**CH-A- 541 462**
**DE-A-2 300 583**

(73) Patentinhaber: **Dr.Ing.h.c. F. Porsche
Aktiengesellschaft
Porschestrasse 42
D-7000 Stuttgart 40 (DE)**

(72) Erfinder: **Linz, Herbert
Im Hasenacker 14
D-7530 Pforzheim-Hohenwart (DE)**
Erfinder: **Lehmann, Klaus-Peter
Gladiolenweg 8
D-7130 Mühlacker (DE)**

EP 0 197 239 B1

Courier Press, Leamington Spa, England.

**Beschreibung**

Die Erfindung bezieht sich auf eine Luftleitvorrichtung am Heck eines Fahrzeuges, insbesondere eines Personenwagens, die sich in Fahrzeugquer- und Längsrichtung erstreckt und gelenkig mit der daruntenliegenden Aufbauwand verbunden ist, wobei zumindest ein in Fahrtrichtung gesehen hintenliegender Endbereich der Luftleitvorrichtung unter Bildung eines etwa V-förmigen Spaltes zu der darunterliegenden Aufbauwand verläuft.

Eine bekannte Luftleitvorrichtung der eingangs genannten Gattung (DE—U—72 40 740) ist an einer Aufbauwand befestigt, wobei ein hinterer Endbereich der Luftleitvorrichtung von der Aufbauwand weggeführt ist und diese abschnittsweise überragt. Die der Aufbauwand zugekehrte Seite des hinteren Endbereiches verläuft etwa im rechten Winkel zur Aufbauwand.

Bei Fahrzeugen mit derartig ausgebildeten Luftleitvorrichtungen hat sich in nachteiliger Weise gezeigt, daß beim Durchfahren einer bestimmten Gattung von automatischen Waschanlagen entweder Beschädigungen an der Luftleitvorrichtung auftreten oder daß die Waschbürste durch den Konturverlauf der Aufbauwand und der Luftleitvorrichtung festgesetzt wird. In letzterem Zustand schaltet die Waschanlage selbsttätig ab, ohne den Waschvorgang zu beenden. Solche Störungen treten insbesondere bei Waschanlagen auf, wo der Waschvorgang durch eine Vorlaufphase und eine Rücklaufphase der Waschbürsten erfolgt und die Waschbürste in jeder der beiden Phasen jeweils nur in einer einzigen Richtung bewegbar ist.

Aufgabe der Erfindung ist es, eine Luftleitvorrichtung am Heck eines Fahrzeuges so zu gestalten, daß beim Durchfahren einer Waschanlage weder die Luftleitvorrichtung beschädigt noch die Waschanlage unerwünscht außer Betrieb gesetzt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die schwenkbare Ausgestaltung der Luftleitvorrichtung beim Durchfahren einer automatischen Waschanlage einerseits Beschädigungen an der Luftleitvorrichtung vermieden werden und daß sich andererseits die Waschanlage nicht während des Waschvorgangs selbsttätig abstellt. Denn die Waschbürste wird von unten gegen die Luftleitvorrichtung gedrückt, worauf diese nach oben und vorne in eine widerstandsreduzierende Lage verschwenkt wird, so daß stets eine Vorwärtsbewegung der Waschbürste gewährleistet ist. Nach Passieren der Waschbürste wird die Luftleitvorrichtung durch eine Rückholeinrichtung selbsttätig nach unten in ihre Betriebsstellung zurückgeführt.

Eine an der Luftleitvorrichtung vorgesehene Arretiereinrichtung sorgt dafür, daß die Luftleitvorrichtung erst ab einer definierten Krafteinwirkung verschwenkbar ist; bei fahrbahnbedingten Stößen verbleibt sie dagegen in ihrer vorgesehenen Lage.

Weiterbildungen der Erfindung sind in der abhängigen Ansprüchen 2 bis 13 angegeben.

Ein Ausführungsbeispiel der Erfindung ist in der Zeichnung dargestellt und wird im folgenden näher erläutert.

Es zeigt

Fig. 1 eine Schrägansicht von hinten auf den Heckbereich eines Personenwagens mit einer Luftleitvorrichtung,

Fig. 2 eine Teildraufsicht auf die Luftleitvorrichtung,

Fig. 3 eine Draufsicht auf ein Scharnier der Luftleitvorrichtung in größerem Maßstab,

Fig. 4 eine Ansicht in Pfeilrichtung R der Fig. 3,

Fig. 5 eine Seitenansicht auf die Luftleitvorrichtung,

Fig. 6 einen Schnitt nach der Linie VI—VI der Fig. 3,

Fig. 7 einen Längsschnitt durch die Luftleitvorrichtung und eine weitere Ausführungsform eines Scharniers,

Fig. 8 einen Schnitt nach der Linie VIII—VIII der Fig. 7,

Fig. 9 einen Schnitt nach der Linie IX—IX der Fig. 7,

Fig. 10 eine Ansicht in Pfeilrichtung S, mit der der Luftleitvorrichtung zugekehrten Scharnierhälfte,

Fig. 11 eine Ansicht entsprechend Fig. 10 mit der aufbauseitig befestigten Scharnierhälfte.

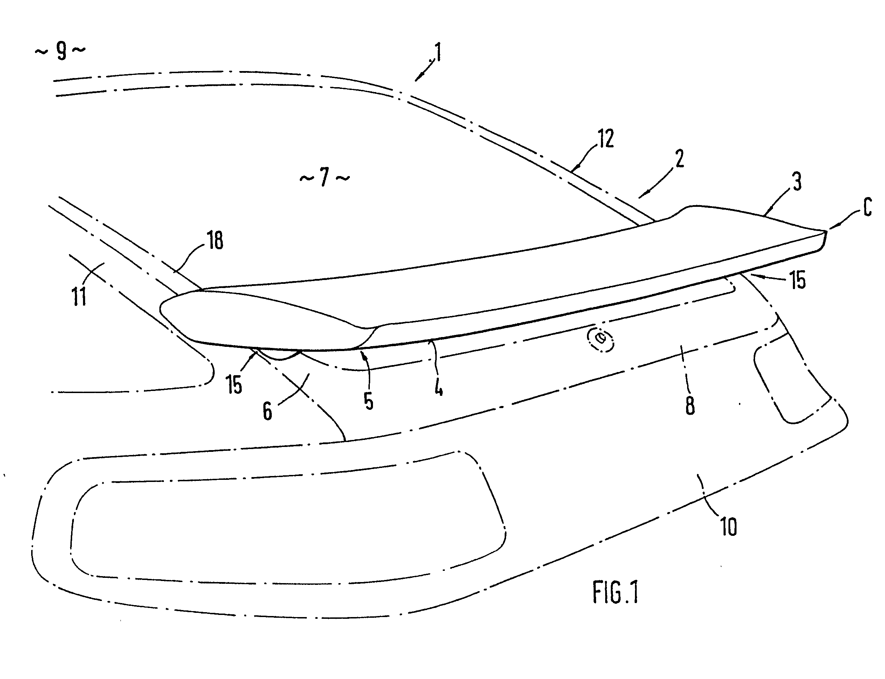

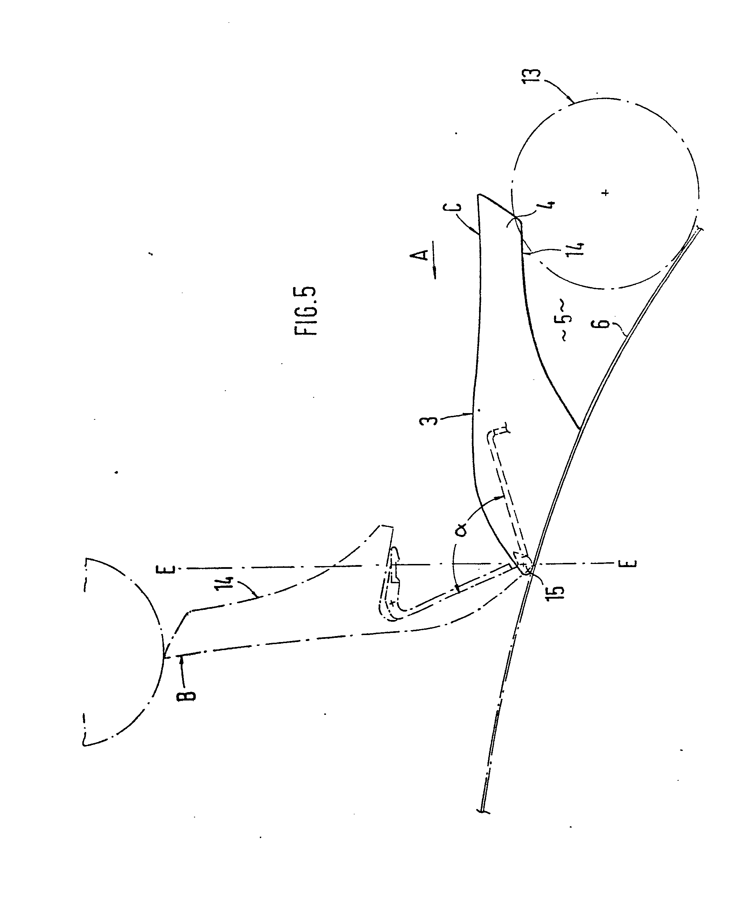

Ein Personenwagen 1 weist im Heck 2 eine aerodynamisch ausgebildete Luftleitvorrichtung 3 auf, die sich in Fahrzeugquerrichtung über einen wesentlichen Teil der Fahrzeugbreite erstreckt. Ein in Fahrtrichtung A gesehen hintenliegender Endbereich 4 der Luftleitvorrichtung 3 verläuft unter Bildung eines etwa V-förmigen Spaltes 5 zu einer darunterliegende Aufbauwand 6 (Fig. 1 und 5).

Die fließheckartig verlaufende Aufbauwand 6 wird gemäß Fig. 1 durch eine mit einer Heckscheibe 7 versehene Heckklappe 8 gebildet. Die Heckklappe 8 ist oben an ein Dach 9, unten an ein aus elastischem Werkstoff hergestelltes Endteil 10 und an den beiden Längsseiten an Seitenteile 11, 12 angeschlossen.

Damit beim Durchfahren einer automatischen Waschanlage eine um eine horizontale Querachse gelagerte Waschbürste 13 bei ihrer Bewegung in Fahrtrichtung A nicht im V-förmigen Spalt 5 zwischen einer Unterseite 14 des hinteren Endbereiches 4 und der Aufbauwand 6 festgesetzt wird, ist die Luftleitvorrichtung 3 unter Vermittlung von zumindest einem Scharnier 15 drehbar an der Aufbauwand 6 angelenkt, dergestalt, daß die Luftleitvorrichtung 3 unter Einwirkung der sich in Fahrtrichtung A bewegenden Waschbürste 13 nach oben in eine Widerstandsreduzierende Lage B verschwenkbar ist (Fig. 5). Eine etwa horizontal ausgerichtete Scharnierachse 16 des Scharniers 15 ist in Fahrtrichtung A gesehen, banachbart dem vorderen Ende der Luftleitvorrichtung 3 angeordnet.

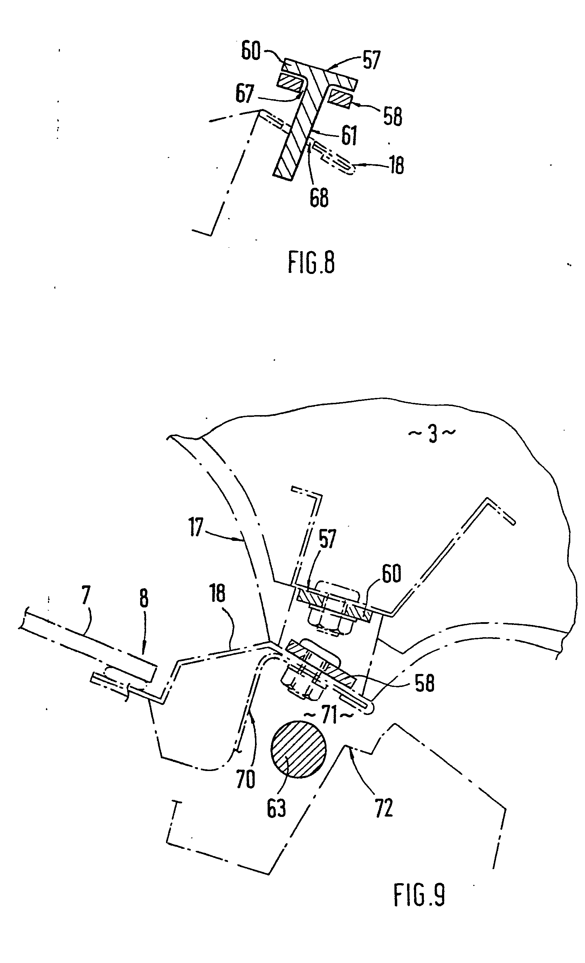

Vorzugsweise sind zwei mit Abstand zueinander angeordnete Scharniere 15 zwischen Luftleitvorrichtung 3 und Aufbauwand 6 vorgeshen, deren Scharnierachsen 16 miteinander fluchten. Die Scharniere 15 sind im Bereich von seitlich außenliegenden Stützabschnitten 17 der Luftleitvorrichtung 3 angebracht, wobei jeder Stützabschnitt 17 an ein seitliches Rahmenteil 18 der Heckklappe 8 herangeführt ist (Fig. 9).

Zwischen den beiden Stützabschnitten 17 verläuft die Luftleitvorrichtung 3 mit Abstand zur darunterliegenden Heckscheibe 7 und weist im Querschnitt ein tragflügelartig ausgebildetes Profil auf.

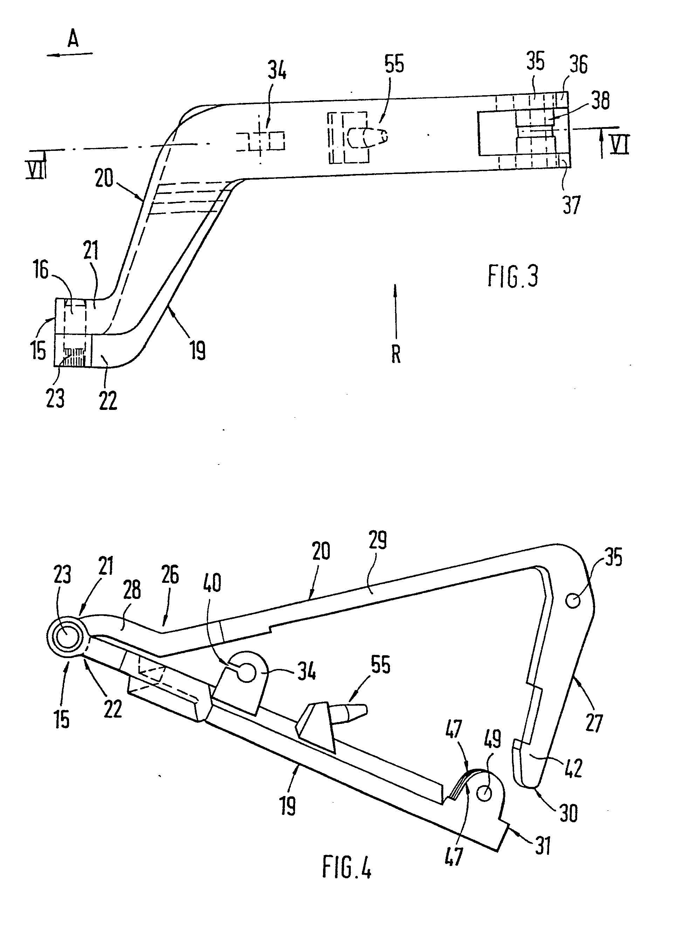

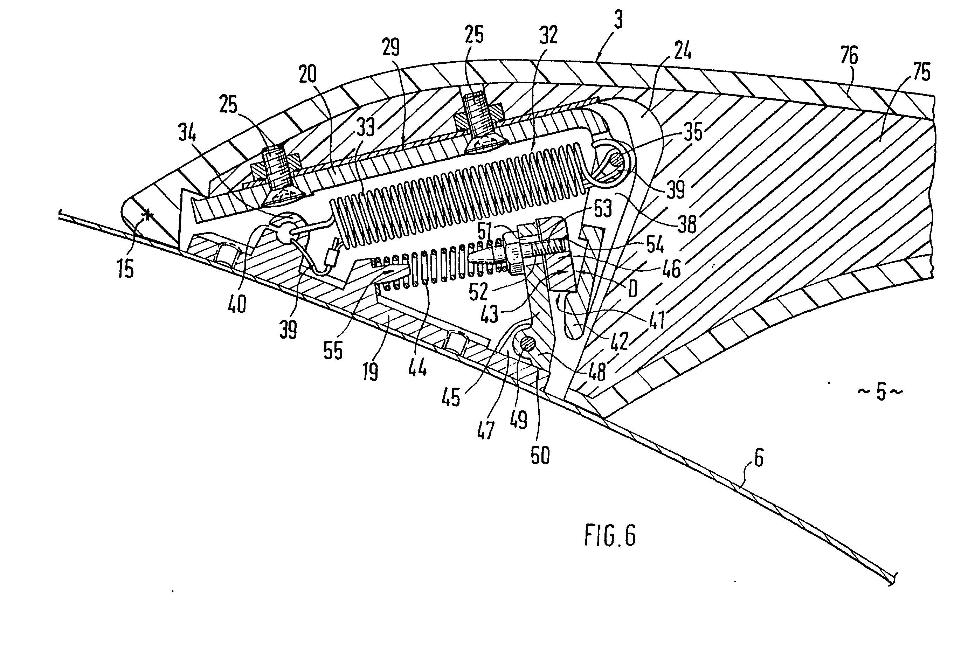

Gemäß einer ersten Ausführungsform (Fig. 3 und 4) umfaßt jedes Scharnier 15 zwei Scharnierhälften 19, 20, die an ihren in Fahrtrichtung A gesehen, vorneliegenden Enden 21, 22 unter Vermittlung eines etwa horizontal ausgerichteten Scharnierstiftes 23 drehbar miteinander verbunden sind. Die feststehende Scharnierhälfte 19 ist mittels nicht näher dargestellter Befestigungselemente mit der Heckklappe 8 verbunden, wogegen die schwenkbare Scharnierhälfte 20 in eine Nische 24 der Luftleitvorrichtung 3 hineinragt und dort über Schrauben 25 in Lage gehalten ist (Fig. 6).

In der Seitenansicht (Fig. 4) weist die Scharnierhälfte 19 einen etwa geradlinigen Verlauf auf; die andere Scharnierhälfte 20 hingegen setzt sich aus mehreren, winkelig aneinandergesetzten Schenkeln 26, 27 zusammen. Ein erster Abschnitt 28 des Schenkels 26 ist etwa parallel zur Scharnierhälfte 19 ausgerichtet, wogegen ein zweiter Abschnitt 29 unter einem spitzen Winkel zur Scharnierhälfte 19 verläuft und schräg nach oben ansteigt. Der andere Schenkel 27 der Scharnierhälfte 20 ist schräg nach unten gerichtet, wobei ein freies Ende 30 des Schenkels 27 an ein hinteres Ende 31 der Scharnierhälfte 19 herangeführt ist.

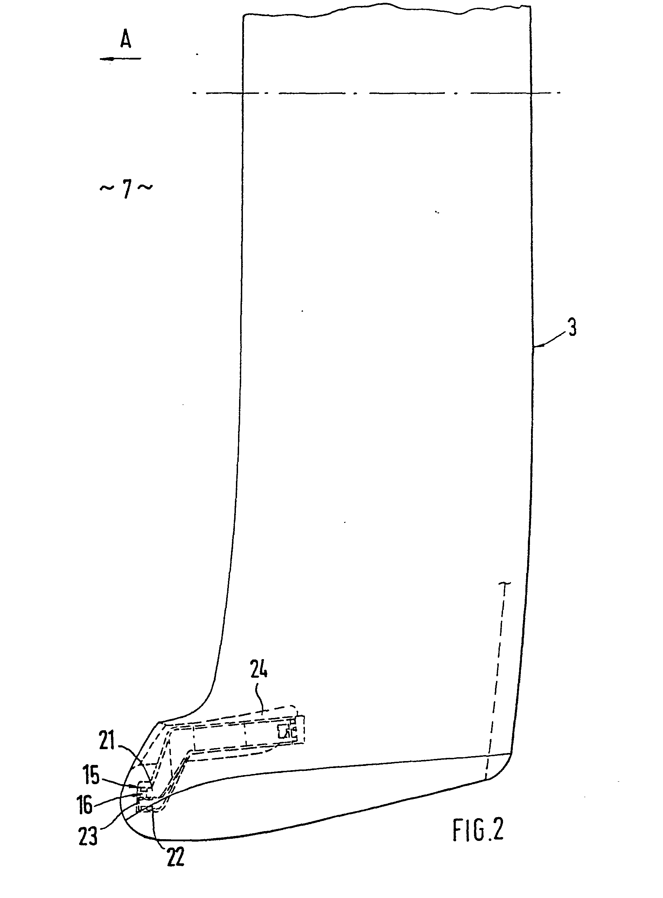

In der Draufsicht gesehen können beide Scharnierhälften 19, 20 etwa geradlinig verlaufen oder aber, wie die Fig. 2 und 3 zeigen, winkelförmig ausgebildet sein. In letzterem Falle verlaufen die beiden durch den Scharnierstift 23 verbundenen Enden 21, 22 der Scharnierhälften 19, 20 mit seitlichem Abstand zu den Bereichen, an denen die Scharnierhälften 19, 20 mit der Luftleitvorrichtung 3 und der Heckklappe 8 befestigt sind.

Zwischen der Scharnierhälfte 19 und der Scharnierhälfte 20 ist eine Rückholeinrichtung 32 vorgesehen, wodurch nach Passieren der Waschbürste 13 die Luftleitvorrichtung 3 selbsttätig nach unten in ihre Betriebsstellung C zurückgeführt wird. Die Rückholeinrichtung 32 wird gemäß Fig. 6 durch eine Zugfeder 33 gebildet, die etwa parallel zum Abschnitt 29 der Scharnierhälfte 20 verläuft und einerseits an der feststehenden Scharnierhälfte 19 und andererseits an der schwenkbaren Scharnierhälfte 20 angreift.

Ein Ende der Zugfeder 33 ist an einer Ringöse 34 eingehängt, die benachbart der Scharnierachse 15 angeordnet und einstückig mit der Scharnierhälfte 19 ausgebildet ist. Das gegenüberliegende hintere Ende der Zugfeder 33 wirkt mit einem Bolzen 35 zusammen, der im oberen Bereich des Schenkels 27 der Scharnierhälfte 20 vorgesehen ist. Der sich in Querrichtung erstreckende Bolzen 35 verbindet zwei mit Abstand zueinander angeordnete Wandabschnitte 36, 37 des Schenkels 27. Zwischen den beiden Wandabschnitten 36, 37 ist eine Aussparung 38 vorgesehen.

Die Schwenkbewegung der Luftleitvorrichtung 3 ist durch ein Halteseil 39 begrenzt, das abschnittsweise innerhalb der Zugfeder 33 verläuft und an der Ringöse 34 sowie am Bolzen 35 befestigt ist. Die Ringöse 34 weist örtlich einen Schlitz 40 zum Einführen des Halteseiles 39 auf.

Um Schwenkbewegungen der Luftleitvorrichtung 3 im Fahrbetrieb — beispielsweise durch Straßenunebenheiten — zu verhindern, ist an jedem Scharnier 15 eine ausrückbare Arretiereinrichtung 41 vorgesehen. Die Arretiereinrichtung 41 umfaßt ein hakenförmiges feststehendes Stützglied 42, das mit einem weiteren, beweglichen Stützglied 43 der anderen Scharnierhälfte 19 zusammenwirkt, wobei das bewegliche Stützglied 43 mittels einer Druckfeder 44 gegen das andere Stützglied 42 gespannt ist. Das hakenförmige Stützglied 42 ist einstückig mit dem Schenkel 27 der beweglichen Scharnierhälfte 20 ausgebildet.

Das Stützglied 43 setzt sich aus einem Hebel 45 und einem Gleitstück 46 zusammen. Das Gleitstück 46 steht in Verriegelungsstellung D der Arretiereinrichtung 41 mit dem Stützglied 42 im Wirkverbindung. Der Hebel 45 ist an einem Ende drehbar an der Scharnierhälfte 19 angelenkt. Hierzu sind an der Scharnierhälfte 19 zwei mit Abstand zueinander angeordnete Lageraugen 47 vorgesehen, zwischen denen ein Lagerabschnitt 48 des Hebels 45 unter Vermittlung einer Achse 49 aufgenommen ist. Ein am Hebel 45 benachbart dem Lagerabschnitt 48 angeordneter Anschlag 50 stützt sich an der darunterliegenden Scharnierhälfte 19 ab. Hierdurch wird erreicht, daß sich das Stützglied 43 lediglich in Fahrtrichtung A verschwenken läßt. Das Gleitstück 46 ist in Höhenrichtung gesehen, einstellbar am Hebel 45 befestigt. Hierzu ist am Hebel 45 eine Bohrung 51 vorgesehen, die einen größeren Durchmesser aufweist als ein hindurchgeführter Gewindeabschnitt 52 eines Aufnahmedornes 53. Ein Ende des Aufnahmedorns 53 ist in eine Gewindebohrung 54 des Gleitstücks 46 eingedreht. Ein gegenüberliegender, kegelförmig ausgebildeter Abschnitt des Aufnahmedornes 53 nimmt ein Ende der Druckfeder 44 auf. Das andere Ende der Druckfeder 44 wirkt mit einem abgestellten Aufnahmeabschnitt 55 der Scharnierhälfte 19 zusammen.

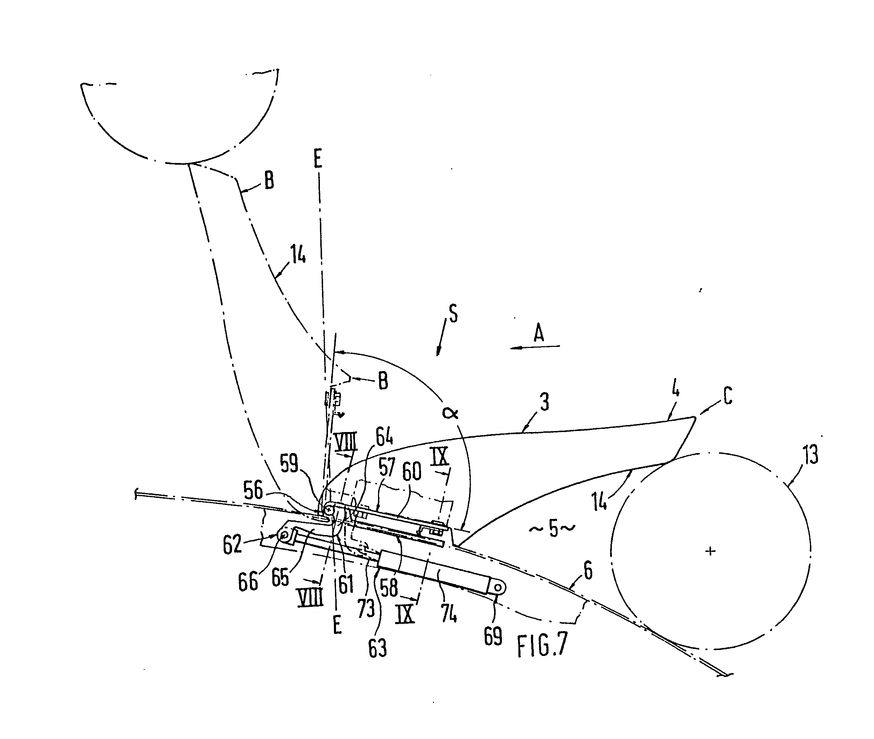

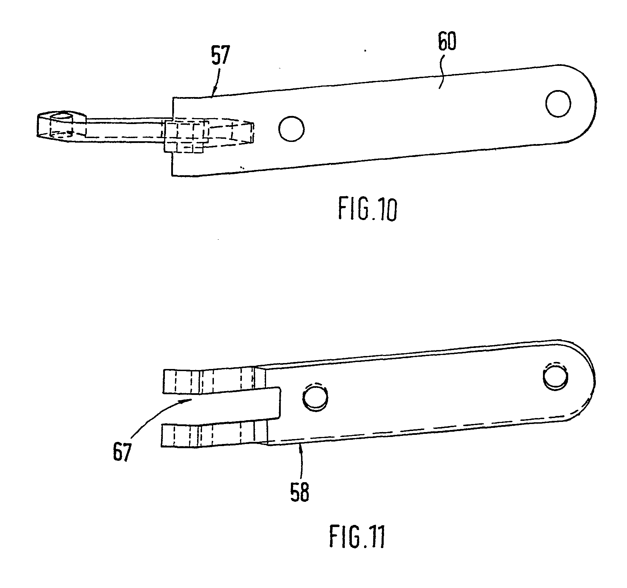

In den Fig. 7 bis 11 ist eine weitere Ausführungsform einer schwenkbar am Heck gelagerten Luftleitvorrichtung 3 dargestellt. Zur Anlenkung dieser Luftleitvorrichtung 3 ist ein Scharnier 56 vorgesehen, das sich aus Scharnierhälften 57 und 58 zusammensetzt. Die beiden Scharnierhälften 57, 58 sind in einem in Fahrtrichtung A gesehen vorneliegenden Bereich unter Vermittlung eines Scharnierstiftes 59 drehbar miteinander verbunden. Die an der Luftleitvorrichtung 3 befestigte Scharnierhälfte 57 ist als Winkelhebel ausgebildet, wobei ein etwas horizontal ausgerichteter Hebelarm 60 von unten an die Luftleitvorrichtung 3 angeschraubt wird (Fig. 6). Der andere, etwa vertikal verlaufende und zweifach abgewinkelte Hebelarm 61 ist an seinem freien Ende 62 mit einer Gasfeder 63 verbunden, die in Betriebsstellung C der Luftleitvorrichtung 3 etwa parallel zum Hebelarm 60 der Scharnierhälfte 57 ausgerichtet ist.

Der Hebelarm 61 weist benachbart des Scharnierstiftes 59 einen schräg nach unten weggeführten Steg 64 auf, an den sich ein längsgerichteter, in Fahrtrichtung verlaufender Abschnitt 65 anschließt, der an seinem vorderen Ende schräg nach unten abgestellt ist. Ein vorderer Anlenkpunkt 66 der Gasfeder 63 liegt in Fahrtrichtung A gesehen weiter vorne als der Scharnierstift 59.

Die an der Heckklappe 8 befestigte Scharnierhälfte 58 ist etwa geradlinig ausgebildet und weist in ihrem vorderen Bereich eine Schlitzöffnung 67 zum Hindurchführen des nach unten abgestellten Hebelarms 61 der anderen Scharnierhälfte 57 auf.

Der vertikal abgestellte Hebelarm 61 durchdringt außerdem eine Ausnehmung 68 der Heckklappe 8 (Fig. 8).

Der hintere Anlenkpunkt 69 der Gasfeder 63 ist an der Heckklappe 8 vorgesehen und zwar an einem aufrechten Wandabschnitt 70. Die Gasfeder 63 ist verdeckt in einem kanalförmigen Hohlraum 71 zwischen der schwenkbaren Heckklappe 8 und einem feststehenden, aufbauseitigen Rahmen 72 angeordnet.

Bei dieser zweiten Ausführungsform übernimmt die Gasfeder 63 gleichzeitig die Funktion einer Rückhol- und Arretiereinrichtung. In Betriebsstellung C der Luftleitvorrichtung 3 weist die Gasfeder 63 ihren maximalen Hub auf. Bei hochgeschwenkter Luftleitvorrichtung 3 (Lage B) ist die Kolbenstange 73 der Gasfeder 63 weitgehend in den Zylinder 74 eingefahren.

Bei beiden Ausführungsformen wird die Luftleitvorrichtung 3 um einem Winkel α größer 90° verschwenkt, dergestalt, daß die Unterseite 14 des hinteren Endbereiches 4 über eine vertikale Ebene E—E hinaus nach vorne bewegt wird.

Die Luftleitvorrichtung 3 weist gemäß Fig. 5 einen Hartschaumkern 75 auf, der allseitig mit Ausnahme des Nischenbereiches 24 von einer dünnwandigen, weichen Schaumauflage 76 umgeben ist.

**Patentansprüche**

1. Luftleitvorrichtung (3) am Heck eines Fahrzeuges, insbesondere eines Personenwagens, die sich in Fahrzeugquer- und -längsrichtung erstreckt und gelenkig mit der darunterliegenden Aufbauwand (6) verbunden ist, wobei zumindest ein in Fahrtrichtung gesehen hintenliegender Endbereich der Luftleitvorrichtung unter Bildung eines etwa V-förmigen Spaltes zu der darunterliegenden Aufbauwand (6) verläuft, dadurch gekennzeichnet, daß die Luftleitvorrichtung (3) unter Vermittlung von zumindest einem Scharnier (15, 56) an der Aufbauwand angelenkt ist, dergestalt, daß sie unter Einwirkung einer sich in Fahrtrichtung (A) bewegenden, horizontal gelagerten Waschbürste (13) einer Waschanlage nach oben bzw. nach vorne in eine widerstandsreduzierende Lage (B) verschwenkbar ist und daß nach Passieren der Waschbürste (13) die Rückholung der Luftleitvorrichtung (3) nach unten in ihre Betriebsstellung selbsttätig erfolgt.

2. Luftleitvorrichtung nach Anspruch 1, dadurch gekennzeichnet, daß vorzugsweise zwei mit Abstand zueinander angeordnete Scharniere (15, 56) zwischen Luftleitvorrichtung (3) und Aufbauwand (6) vorgesehen sind, deren Scharnierachsen miteinander fluchten.

3. Luftleitvorrichtung nach Anspruch 1, dadurch gekennzeichnet, daß jedes Scharnier (15, 56) zwei Scharnierhälften (19, 20; 57, 58) aufweist, die an ihren in Fahrtrichtung (A) gesehen, vorneliegenden Enden (21, 22) unter Vermittlung eines etwa horizontal ausgerichteten Scharnierstiftes miteinander verbunden sind, wobei eine Scharnierhälfte (19, 58) an der darunterliegenden Aufbauwand (6) befestigt ist, während die andere in eine Nische (24) der Luftleitvorrichtung (3) hineinragende Scharnierhälfte (20, 57) mit besagter Luftleitvorrichtung (3) verbunden ist.

4. Luftleitvorrichtung nach den Ansprüchen 1 bis 3, dadurch gekennzeichnet, daß an jedem Scharnier (15, 56) eine Rückholeinrichtung (32) für die bewegliche Scharnierhälfte (20, 57) vorgesehen ist.

5. Luftleitvorrichtung nach Anspruch 4, dadurch gekennzeichnet, daß die Rückholeinrichtung (32) durch eine Zugfeder (33) gebildet wird, die einerseits an der feststehenden Scharnierhälfte (19) und andererseits an der schwenkbaren Scharnierhälfte (20) angreift.

6. Luftleitvorrichtung nach Anspruch 4, dadurch gekennzeichnet, daß als Rückholeinrichtung (32) eine Gasfeder (63) vorgesehen ist.

7. Luftleitvorrichtung nach Anspruch 6, dadurch gekennzeichnet, daß die Gasfeder (63) einerseits an einem die Scharnierhälfte (57) bildenden Winkelhebel und andererseits an einer Heckklappe (8) drehbar angelenkt ist.

8. Luftleitvorrichtung nach Anspruch 6, dadurch gekennzeichnet, daß die Gasfeder (63) verdeckt in einem kanalförmigen Hohlraum (71) unterhalb der Aufbauwand (6) verläuft.

9. Luftleitvorrichtung nach Anspruch 1, dadurch gekennzeichnet, daß die Luftleitvorrichtung (3) mittels einer ausrückbaren Arretiereinrichtung (41) in Lage gehalten ist.

10. Luftleitvorrichtung nach Anspruch 9, dadurch gekennzeichnet, daß die Arretiereinrichtung (41) durch ein an der beweglichen Scharnierhälfte (20) angeordnetes, hakenförmiges Stützglied (42) gebildet wird, das mit einem korrespondierenden, beweglichen Stützglied (43) der feststehenden Scharnierhälfte (19) zusammenwirkt, wobei das bewegliche Stützglied (43) mittels einer Druckfeder (44) gegen das andere Stützglied (42) gespannt wird.

11. Luftleitvorrichtung nach Anspruch 10, dadurch gekennzeichnet, daß sich das bewegliche Stützglied (43) aus einem einseitig angelenkten Hebel (45) und einem Gleitstück (46) zusammensetzt, wobei das einstellbar angeordnete Gleitstück (46) mit dem hakenförmigen Stützglied (42) in Wirkverbindung steht.

12. Luftleitvorrichtung nach Anspruch 1, dadurch gekennzeichnet, daß die Schwenkbewegung der beweglichen Scharnierhälfte (20) durch ein Halteseil (39) begrenzt ist, das abschnittsweise innerhalb der Zugfeder (33) verläuft und einerseits an einer Ringöse (34) der feststehenden Scharnierhälfte (19) und andererseits an einem Bolzen (35) der beweglichen Scharnierhälfte (20) befestigt ist.

13. Luftleitvorrichtung nach Anspruch 1, dadurch gekennzeichnet, daß sie um einen Winkel α größer 90° in Fahrtrichtung (A) verschwenkbar ist, dergestalt, daß eine Unterseite (14) eines hinteren Endbereiches (4) über eine vertikale Ebene (E) hinaus nach vorne bewegt wird.

## Revendications

1. Dispositif de guidage d'air (3) à l'arrière d'un véhicule automobile, en particulier d'une voiture de tourisme, qui s'étend dans la direction transversale et dans la direction longitudinale et qui est relié de manière articulée à la paroi de carrosserie (6) située au-dessous, au moins une zone terminale du dispositif de guidage d'air, située à l'arrière dans le sens de la marche, formant une fente à peu près en V par rapport à la paroi de carrosserie (6) située au-dessous, caractérisé en ce que le dispositif de guidage d'air (3) s'articule sur la paroi de carrosserie par l'intermédiaire d'au moins une charnière (15, 56), de manière à pouvoir pivoter vers la haut ou vers l'avant, dans une position (B) de moindre résistance, sous l'effet d'une brosse de lavage (13) d'une installation de lavage, montée horizontalement et se déplaçant dans le sens de la marche (A), et de manière que le dispositif de guidage d'air (3) soit automatiquement rappelé vers le bas dans sa position de fonctionnement, après passage de la brosse de lavage (13).

2. Dispositif de guidage d'air selon la revendication 1, caractérisé en ce qu'on prévoit de préférence deux charnières (15, 56), espacées l'une de l'autre, entre le dispositif de guidage d'air (3) et la paroi de carrosserie (6), dont les axes de charnière sont alignés.

3. Dispositif de guidage d'air selon la revendication 1, caractérisé en ce que chaque charnière (15, 56) comporte deux moitiés de charnière (19, 20; 57, 58) qui sont reliées entre elles à leurs extrémités avant (21, 22) vues dans le sens de la marche (A), par l'intermédiaire d'une goupille de charnière dirigée à peu près horizontalement, une moitié de charnière (19, 58) étant fixée sur la paroi de carrosserie (6) située au-dessous, tandis que l'autre moitié de charnière (20, 55) pénétrant dans une niche (24) du dispositif de guidage d'air (3), est reliée audit dispositif de guidage d'air.

4. Dispositif de guidage d'air selon les revendication 1 à 3, caractérisé en ce qu'on prévoit un dispositif de rappel (32) sur chaque charnière (15, 56), pour la moitié de charnière mobile (20, 57).

5. Dispositif de guidage d'air selon la revendication 4, caractérisé en ce que le dispositif de rappel (32) est formé par un ressort de traction (33) qui agit d'une part sur la moitié de charnière fixe (19) et d'autre part sur la moitié de charnière (20) pivotante.

6. Dispositif de guidage d'air selon la revendication 4, caractérisé en ce qu'on prévoit comme dispositif de rappel (32), un ressort pneumatique (63).

7. Dispositif de guidage d'air selon la revendication 6, caractérisé en ce que le ressort pneumatique s'articule de manière à pouvoir tourner d'une part sur un levier coudé formant la moitié de charnière (57), et d'autre part sur un hayon arrière (8).

8. Dispositif de guidage d'air selon la revendication 6, caractérisé en ce que le ressort pneumatique (63) est dissimulé dans une cavité en forme de canal (71) située au-dessous de la paroi de carrosserie (6).

9. Dispositif de guidage d'air selon la revendication 1, caractérisé en ce que le dispositif de guidage d'air (3) est maintenu en position par un dispositif de blocage (41) pouvant être supprimé.

10. Dispositif de guidage d'air selon la revendication 9, caractérisé en ce que le dispositif de blocage (41) est formé par un organe d'appui (42) en forme de crochet, placé sur la moitié de charnière (20) mobile, lequel organe coopère avec un organe d'appui mobile (43), correspondant, de la moitié de charnière fixe (19), l'organe d'appui (43) mobile étant serré par un ressort de pression (44) contre l'autre organe d'appui (42).

11. Dispositif de guidage d'air selon la revendication 10, caractérisé en ce que l'organe d'appui (43) mobile se compose d'un levier (45) articulé d'un côté et d'un coulisseau (46), le coulisseau (46) placé de manière réglable étant en liaison active avec l'organe d'appui (42) en forme de crochet.

12. Dispositif de guidage d'air selon la revendication 1, caractérisé en ce que le pivotement de la moitié de charnière mobile (20) est limité par un câble de maintien (39) dont certaines parties se trouvent à l'intérieur du ressort de traction (33), et qui est fixé d'une part sur un oeillet annulaire (34) de la moitié de charnière fixe (19) et d'autre part sur un axe (35) de la moitié de charnière mobile (20).

13. Dispositif de guidage d'air selon la revendication 1, caractérisé en ce qu'il peut pivoter d'un angle α, supérieur à 90° dans le sens de la marche (A), de manière qu'une face inférieure (14) d'une zone terminale arrière (4), soit déplacée vers l'avant au-delà d'un plan vertical (E).

## Claims

1. A spoiler (3) at the rear of a vehicle, in particular a car, the spoiler extending in a transverse and longitudinal direction of the vehicle and being hinged to the structural wall (6) below the spoiler, wherein at least one end region at the rear of the spoiler in the direction of travel extends relative to the structural wall (6) therebelow so as to form a substantially V-shaped gap, characterised in that the spoiler (3) is hinged to the structural wall by means of at least one hinge (15, 56) in such a way that the spoiler can be pivoted upwards and forwards into a resistance-reducing position (B) under the action of a horizontally-mounted washing brush (13) of a washing installation, which brush moves in the direction of travel (A), and in that, after the washing brush (13) has passed, the spoiler (3) is automatically returned downwards into its operating position.

2. A spoiler according to Claim 1, characterised in that preferably two hinges (15, 16) spaced from each other are provided between the spoiler (3) and the structural wall (6), the axes of the hinges being in alignment.

3. A spoiler according to Claim 1, characterised in that each hinge (15, 56) has two halves (19, 20; 57, 58) which are joined together at their front ends (21, 22) in the direction of travel (A) by means of a hinge pin extending substantially horizontally, one hinge half (19, 58) being fixed to the structural wall (6) below, while the other hinge half (20, 57) which projects into a recess (24) in the spoiler (3), is joined to the said spoiler (3).

4. A spoiler according to Claims 1 to 3, characterised in that a return device (32) is provided on each hinge (15, 56) for the movable hinge half (20, 57).

5. A spoiler according to Claim 4, characterised in that the return device (32) is formed by a tension spring (33) acting on the fixed hinge half (19) on the one hand and on the pivotable hinge half (20) on the other.

6. A spoiler according to Claim 4, characterised in that a gas spring (63) is provided as the return device (32).

7. A spoiler according to Claim 6, characterised in that the gas spring (63) is rotatably hinged on the one hand to an angle lever forming the hinge half (57) and on the other hand to a hatch door (8).

8. A spoiler according to Claim 6, characterised in that the gas spring (63) extends in and is covered by a channel-shaped cavity (71) below the structural wall (6).

9. A spoiler according to Claim 1, characterised in that the spoiler (3) is held in position by means of a disengageable stop device (41).

10. A spoiler according to Claim 9, characterised in that the stop device (41) is formed by a hook-shaped supporting member (42) arranged on the movable hinge half (20) and cooperating with a corresponding movable supporting member (43) of the fixed hinge half (19), the movable supporting member (43) being tensioned against the other supporting member (42) by means of a compression spring (44).

11. A spoiler according to Claim 10, characterised in that the movable supporting member (43) is made up of a lever (45) hinged on one side and a sliding member (46), the adjustably arranged sliding member (46) being in operative connection with the hook-shaped supporting member (42).

12. A spoiler according to Claim 1, characterised in that the pivotal movement of the movable hinge half (20) is limited by a stop cable (39), a portion of which extends inside the tension spring (33) and is fixed on the one hand to an eye ring (34) of the fixed hinge half (19) and on the other hand to a bolt (35) of the movable hinge half (20).

13. A spoiler according to Claim 1, characterised in that it is pivotable about an angle α greater then 90° in the direction of travel (A), in such a way that an underside (14) of a rear end region (4) is moved fowards beyond a vertical plane (E).

~9~

~7~

1

12

2

3

C

18

11

15

15

6

5

4

8

10

FIG.1

EP 0 197 239 B1

A

~ 7 ~

3

24

21

15

16

23

22

FIG.2

2

FIG.3

FIG.4

FIG.5

FIG.6

FIG.7

FIG.8

FIG.9

FIG.10

FIG.11